(19) Europäisches Patentamt
European Patent Office
Office européen des brevets

(11) **EP 2 905 986 B1**

(12) **EUROPEAN PATENT SPECIFICATION**

(45) Date of publication and mention
of the grant of the patent:
**08.11.2017 Bulletin 2017/45**

(51) Int Cl.:
*H04W 24/08* (2009.01)    *H04W 64/00* (2009.01)
*H04L 27/26* (2006.01)    *G01S 11/06* (2006.01)

(21) Application number: **13842167.2**

(22) Date of filing: **28.06.2013**

(86) International application number:
**PCT/CN2013/078394**

(87) International publication number:
**WO 2014/048150 (03.04.2014 Gazette 2014/14)**

(54) **METHOD AND DEVICE FOR TESTING MOVING SPEED OF TERMINAL**

VERFAHREN UND VORRICHTUNG ZUM TESTEN DER BEWEGUNGSGESCHWINDIGKEIT EINES ENDGERÄTS

PROCÉDÉ ET DISPOSITIF POUR TESTER LA VITESSE DE DÉPLACEMENT D'UN TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2012 CN 201210365083**

(43) Date of publication of application:
**12.08.2015 Bulletin 2015/33**

(73) Proprietor: **China Academy of
Telecommunications Technology
Hai Dian District
Beijing 100191 (CN)**

(72) Inventor: **LI, Xiaojiao
Beijing 100191 (CN)**

(74) Representative: **Nony
11 rue Saint-Georges
75009 Paris (FR)**

(56) References cited:
**CN-A- 1 507 292       CN-A- 1 507 292
CN-A- 101 437 243    CN-A- 102 281 170
CN-A- 102 325 101**

**Description**

**Field of the Invention**

The present invention relates to the field of mobile communications and particularly to a method and device for testing the moving speed of a terminal.

**Background of the Invention**

In a communication system, a terminal may move at a high speed so that a considerable Doppler shift will occur, and the amplitude of a signal may fade rapidly and the phase of the signal may vary rapidly particularly in a multipath scenario, thus deteriorating the performance of the system. It is thus necessary for a receiving end to adjust adaptively algorithms related to channel estimation and signal detection dependent upon the current moving speed of the terminal, and to this end, an algorithm to measure the speed accurately is required to support such an adaptive adjustment strategy. At present there are the following algorithms to measure the speed:

A. Crossing Rate Algorithm

The crossing rate algorithm is very simple in principle and easy to perform and has been widely applied in real communication systems. The Doppler shift may result in a temporally fluctuating signal so that generally there is a deep fading of the amplitude of the signal once the terminal moves over a distance of half the wavelength. The number of times Le that the level fades per unit time can be counted to thereby estimate the speed. With a carrier frequency fc and the velocity of light c, the speed can be estimated as v=c/fc*Le.

B. Correlation Algorithm

The moving speed may result in the Doppler dispersion of the signal in the frequency-domain, and there is the following relationship between time-domain autocorrelation of the received signal and the Doppler dispersion over a Rayleigh channel:

$$\rho_x(\tau) = \sigma^2 J_0(2\pi f_m \tau) \qquad (1)$$

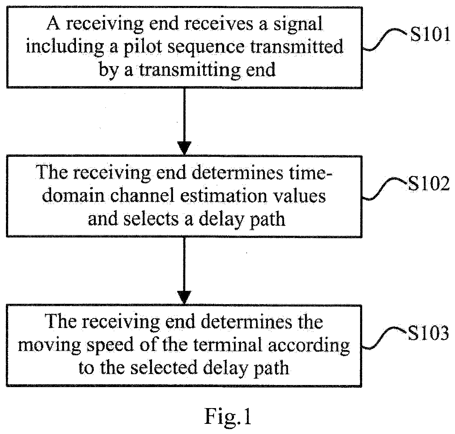

Where $f_m$ represents the largest Doppler dispersion, $\tau$ represents a correlation time, $\rho_x(\tau)$ represents autocorrelation of the signal, $\sigma^2$ represents noise power, and $J_0(\cdot)$ represents a Bessel function of the first kind of order zero with a curve as illustrated in Fig.1. Thus a statistic of a time-domain autocorrelation value of the signal is made from the time-domain autocorrelation characteristic of the signal, and the Doppler dispersion $f_m$ is estimated against a lookup table of Bessel function curves to thereby estimate the moving speed. The equation (1) has to be revised for use in view of a direction of arrival distributed non-uniformly and affected by a Rician factor K over a Rician channel.

A general problem with the crossing rate algorithm is how to count Le accurately. There may be a large number of observable burrs of the signal in time-domain being affected by noise and the channel. The number of times that the level fades can be counted accurately only after the signal is de-noised, de-burred, etc. Moreover the accuracy in estimation of the speed may also be affected by the statistic operation for the level crossing rate. The signal has to be preprocessed in the algorithm nevertheless at low precision.

The count characteristic in the correlation algorithm can only be applicable to the Rayleigh channel but not to the Rician channel, so the algorithm has to be revised by the Rician factor in the other scenarios, but the Rician factor K may not be easy to determine, thus complicating the algorithm. Moreover the Bessel curve is not a monotonic function, and in order to estimate the speed accurately, $2\pi f_m \tau < 4$ shall be guaranteed, and if there is a significant Doppler dispersion $f_m$ at a high speed, then the Doppler dispersion can be estimated only if the value of $\tau$ is very small, so that the correlation algorithm may be restricted greatly at a high speed. Moreover the statistic operation for autocorrelation may also affect the precision of the algorithm.

CN 1 507 292 A patent application discloses a speed estimating device and method for radio communication system. The method includes extracting the pilot frequency signal in pilot frequency channel in radio communication system and performing the power spectrum processing of multipath pilot frequency signal; subsequent calculation of maximum Doppler frequency of multipath pilot frequency signal; and final speed estimation in the radio communication system.

Furthermore with both of the methods above, generally after channel estimation is performed on respective received signals, a statistic of derived channel response values

throughout the bandwidth has to be made with a considerable effort of calculation, and a current calculation result can only be applicable, at some delay in time, to next channel estimation and channel detection

**Summary of the Invention**

Embodiments of the invention provide a method for testing a moving speed of a terminal so as to measure the moving speed of the terminal according to pilots, and noise power.

An embodiment of the invention provides a method for testing a moving speed of a terminal, the method including:

receiving, by a receiving end, a signal including a pilot sequence transmitted by a transmitting end;

determining, by the receiving end, a time-domain channel estimation value corresponding to each pilot symbol being transmitted, in the pilot sequence according to a known pilot sequence and the received signal including the pilot sequence, and selecting a delay path according to the time-domain channel estimation values; and

determining, by the receiving end, the moving speed of the terminal according to the delay path selected in a preset length of time;

wherein a number of transmission paths with different delays in transmission over a real space channel are embodied as corresponding power values at different points of time in time-domain channel estimation, wherein a peak point with a power value above a threshold is referred to as the delay path;

wherein determining, by the receiving end, the time-domain channel estimation value corresponding to each pilot symbol being transmitted, in the pilot sequence according to the known pilot sequence and the signal comprising the pilot sequence and selecting the delay path according to the time-domain channel estimation values comprises:

determining, by the receiving end, the time-domain channel estimation value corresponding to each pilot symbol being transmitted, in the pilot sequence according to the known pilot sequence and the signal comprising the pilot sequence, and selecting a delay path with a highest power according to the time-domain channel estimation values; and

determining, by the receiving end, a location of the selected delay path with the highest power, and if the receiving end determines that locations of delay paths selected for pilot symbols at the same frequency-domain location are different, then selecting one of the locations of the delay paths and determining the delay path corresponding to the selected location as the delay path

selected for the pilot symbols at the same frequency-domain location, or selecting a location of a delay path maximizing a sum of power of delay paths corresponding to the pilots at the same frequency-domain location and determining the delay path corresponding to the selected location as the delay path selected for the pilot symbols at the same frequency-domain location.

An embodiment of the invention provides a device for testing a moving speed of a terminal, the device including:

a communicating module configured to receive a signal including a pilot sequence transmitted by a transmitting end;

a delay path determining module comprising a time-domain channel estimation value determination unit configured to determine a time-domain channel estimation value corresponding to each pilot symbol being transmitted, in the pilot sequence according to a known pilot sequence and the received signal including the pilot sequence, and a delay path selecting unit configured to select a delay path according to the time-domain channel estimation values; and

a speed determining module configured to determine the moving speed of the terminal according to the delay path selected in a preset length of time;

wherein a number of transmission paths with different delays in transmission over a real space channel are embodied as corresponding power values at different points of time in time-domain channel estimation, wherein a peak point with a power value above a threshold is referred to as the delay path;

wherein the delay path selecting unit is configured:

to determine the time-domain channel estimation value corresponding to each pilot symbol being transmitted, in the pilot sequence according to the known pilot sequence and the signal comprising the pilot sequence, and to select a delay path with a highest power according to the time-domain channel estimation values; and

to determine a location of the selected delay path with the highest power, and if it is determined that locations of delay paths selected for pilot symbols at the same frequency-domain location are different, to select one of the locations of the delay paths and to determine the delay path corresponding to the selected location as the delay path selected for the pilot symbols at the same frequency-domain location, or

to select a location of a delay path maximizing the sum of power of the delay paths corresponding to the pilots at the same frequency-domain location and to determine the delay path corresponding to the selected location as the delay path selected for the pilot symbols at the same frequency-domain location.

As can be apparent from the technical solutions above, in the embodiments of the invention, the receiving end receives a signal including a pilot sequence transmitted by the transmitting end; the receiving end determines a time-domain channel estimation value corresponding to each pilot symbol being transmitted, in the pilot sequence according to a known pilot sequence and the signal including the pilot sequence and selects a delay path according to the time-domain channel estimation values; and the receiving end determines the moving speed of the terminal according to the delay path selected in a preset length of time. Thus the receiving end in the embodiments of the invention can measure the moving speed of the terminal according to the pilots and the noise power, and with this method, the calculation can be performed simply using the available received pilots, and the statistic of the delay path can be made simply, accurately and adaptively to easily get a high precision without being affected by any factor of the algorithm; with this method, only the statistic of the channel response values of the frequencies at which the pilots are located will be made to thereby lower an effort of calculation; and moreover the algorithm with a low delay can be applicable to scenarios at different delays and different speeds, and the process of testing the speed can be performed before the channel estimation is performed on the signal, and the result thereof can be applicable directly to the current channel estimation and signal detection processes.

**Brief Description of the Drawings**

Fig.1 illustrates a schematic flow chart of a method for testing a moving speed of a terminal according to an embodiment of the invention;
Fig.2 illustrates a schematic flow chart of a particular embodiment of a method for testing a moving speed of a terminal according to an embodiment of the invention;
Fig.3 illustrates a schematic flow chart of another particular embodiment of a method for testing a moving speed of a terminal according to an embodiment of the invention;
Fig.4 illustrates a schematic structural diagram of a device for testing a moving speed of a terminal according to an embodiment of the invention; and
Fig.5 illustrates another schematic structural diagram of a device for testing a moving speed of a terminal according to an embodiment of the invention.

**Detailed Description of the Embodiments**

Embodiments of the invention provide a method for testing a moving speed of a terminal so as to measure the moving speed of the terminal according to pilot and noise power to thereby improve the precision in measurement.
Referring to Fig.1, a method for testing a moving speed of a terminal according to an embodiment of the invention includes:

Operation S101: A receiving end receives a signal including a pilot sequence transmitted by a transmitting end;
Operation S102: The receiving end determines a time-domain channel estimation value corresponding to each pilot symbol being transmitted, in the pilot sequence, according to a known pilot sequence and the signal including the pilot sequence and selects a delay path according to the time-domain channel estimation values; and
Operation S103: The receiving end determines the moving speed of the terminal according to the delay path selected in a preset length of time.

There are typically a number of transmission paths with different delays in transmission over a real space channel, and these different transmission paths are embodied as corresponding power values at different points of time in time-domain channel estimation, where a peak point with a power value above some threshold is referred to as a delay path.
Preferably the operation S101 furthermore includes: the receiving end determines noise power when the signal including the pilot sequence is received, and a signal to noise ratio corresponding to the noise power; and the operation S102 is performed by the receiving end upon determining that the signal to noise ratio is above a first preset threshold, that is, furthermore the noise power when the signal including the pilot sequence is received and the signal to noise ratio corresponding to the noise power is required to be determined, and it is determined that the signal to noise ratio is above the first preset threshold, before the operation S102.
Preferably in the operation S102, the receiving end determines a frequency-domain channel estimation value corresponding to each pilot symbol being transmitted, in the pilot sequence, according to the known pilot sequence and the signal including the pilot sequence; and

The receiving end determines the time-domain channel estimation value corresponding to each pilot symbol according to the frequency-domain channel estimation value corresponding to the pilot symbol.

Preferably the delay path is selected in the operation S102 as follows:

The receiving end selects the delay path with the highest power for each pilot symbol; and

The receiving end determines the location of the selected delay path with the highest power, and if the receiving end determines that locations of delay paths selected for pilot symbols at the same frequency-domain location are different,

Then the receiving end determines one of the locations of the delay paths and determines the delay path corresponding to the location as the delay path selected for the pilot symbols at the same frequency-domain location, or selects the location of the delay path maximizing the sum of power of the delay paths corresponding to the pilots at the same frequency-domain location and determines the delay path corresponding to the location as the delay path selected for the pilot symbols at the same frequency-domain location.

Where the location of the delay path refers to a point of time corresponding to the delay path in time-domain channel estimation.

Preferably the operation S103 includes: the receiving end determines an average variation of the delay path selected in the preset length of time according to the delay path in the preset length of time; and

The receiving end determines the moving speed of the terminal according to the average variation of the delay path.

Preferably the receiving end determines the average of the variation of the delay path selected in the preset length of time according to the delay path in the preset length of time as follows:

The receiving end groups together a plurality of pilot symbols at the same frequency-domain location determined in the preset length of time and calculates variations of the delay path of the pilot symbols spaced by a preset number of Orthogonal Frequency Division Multiplexing (OFDM) symbols in the respective groups;

The receiving end determines the averages of the variations of the delay path in the respective groups respectively according to the variations of the delay path of the pilot symbols spaced by the preset number of OFDM symbols in the respective groups; and

The receiving end determines the average variation of the delay path in the preset length of time according to the averages of the variations of the delay path in the respective groups.

Preferably if the determined moving speed of the terminal is below a second preset threshold, then the receiving end increases the preset number of spacing OFDM symbols and recalculates the average of the variation of the delay path.

Preferably the receiving end determines the moving speed of the terminal according to the average variation of the delay path as follows:

The receiving end determines the moving speed of the terminal according to the average variation of the delay path, and a pre-stored relationship between the average variation of the delay path and the moving speed of the terminal.

Preferably the receiving end determines the noise power when the signal including the pilot sequence is received;

The receiving end determines the average noise power in the preset length of time according to the noise power; and

After the receiving end determines the averages of the variations of the delay path in the respective groups respectively according to the variations of the delay path of the pilot symbols spaced by the preset number of OFDM symbols in the respective groups, the method further includes:

The receiving end revises the average of the variation of the delay path by the average noise power in the preset length of time.

Preferably the receiving end determines the averages of the variations of the delay path in the respective groups respectively according to the variations of the delay path of the pilot symbols spaced by the preset number of OFDM symbols in the respective groups as follows:

The receiving end calculates the averages of the variations in the respective groups according to the variations of the delay path in the respective groups;

The receiving end calculates the squares of the differences between the variations in the respective groups and the averages;

The receiving end removes the variations with the squares of the differences above a third preset threshold; and

The receiving end determines the averages of the variations of the delay path in the respective groups respectively by averaging the variations of the delay path remaining after the variations with the squares of the variations above the third preset threshold in the respective groups are removed.

The invention can also be applicable to a communication system in which a signal including a pilot is transmitted, e.g., a Time Division-Synchronous Code Division Multiple Access (TD-SCDMA), a Long Term Evolution (LTE), a Long Term Evolution-Advanced (LTE-A), etc. Since the data transmitted in the pilot is known, an accurate channel estimation value can be derived directly in the simple Least Square (LS) method, and since the speed is measured before channel estimation is performed on the signal, the current speed measurement result can be applied directly to the current channel estimation and signal detection processes. Several particular embodiments of the invention will be given below.

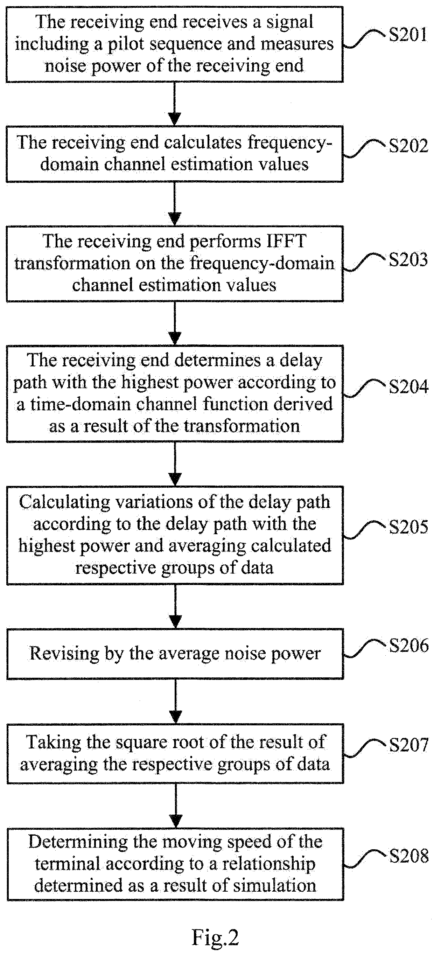

In a first particular embodiment, referring to Fig.2, in the scenario of an LTE system or an LTE-A system, the transmitting end can be a base station, and the receiving end can be a terminal; or the transmitting end can be a terminal, and the receiving end can be a base station. The moving speed of the terminal can be measured particularly in the following steps:

Operation S201: The receiving end receives a signal including a pilot sequence transmitted by the transmitting end; and
Also the receiving end obtains and stores noise power $P_{noise}$ of the receiving end upon reception of the signal.

The receiving end determines power of the received signal and determines a corresponding signal to noise ratio according to the power of the received signal and the noise power. Since the precision in measurement may be degraded at a low signal to noise ratio, it can be specified for the signal to noise ratio that the precision in measurement is determined to be satisfactory when the signal to noise ratio is above a first preset threshold, and at this time measurement of the speed can be initiated; otherwise, a default or null value can be applied.

Operation S202: A received signal $r_{p(i)}$ on Resource Elements (REs) where the pilot sequence is located in the same sub-frame of the signal is taken, where i represents the time-domain index of a pilot, and if the speed is measured according to pilots of the port 0 in a sub-frame of the LTE system, then $i=1,2,3,4$, and a frequency-domain channel estimation value $H_{p(i)}$ corresponding to each pilot symbol being transmitted, in the pilot sequence is derived according to a known pilot sequence $r_{seq(i)}$ in the equation of $H_{p(i)} = r_{p(i)} / r_{seq(i)}$.

Operation S203: A time-domain channel estimation value $h_i$ is derived according to the frequency-domain channel estimation value $H_{p(i)}$ corresponding to each pilot symbol, estimated according to the pilots, particularly by performing $N_{pilot}$ Inverse Fast Fourier Transform (IFFT) on the frequency-domain channel estimation values $H_{p(i)}$ of the respective pilot symbols, where $N_{pilot}$ represents the number of pilots in the frequency-domain, in the equation of:

$$h_i(n) = IFFT(H_{p(i)}), n = 1, \mathrm{L}, N_{pilot}.$$

Operation S204: A delay path with the highest power (simply referred to as the strongest path) is selected. That is, the strongest path is determined respectively for $h_i$ of each pilot symbol, and taking the pilots in the operation S202 as an example, the locations of selected delay paths for $h_1$, $h_2$, $h_3$ and $h_4$ are the value of n corresponding to

$\max\limits_{n=1,\mathrm{L},N_{pilot}} |h_1(n)|$, the value of n corresponding to $\max\limits_{n=1,\mathrm{L},N_{pilot}} |h_2(n)|$, the value of n corresponding to

$\max\limits_{n=1,\mathrm{L},N_{pilot}} |h_3(n)|$, and the value of n corresponding to $\max\limits_{n=1,\mathrm{L},N_{pilot}} |h_4(n)|$ respectively. Typically the locations of the strongest paths as a result of channel estimation on pilot symbols at the same frequency-domain location are the same, and if they are different, then some symbol can be taken as a reference, or the value of n corresponding to

$\max\limits_{n=1,\mathrm{L},N_{pilot}} \left[ \left| h_{i_1(k)}(n) \right| + \left| h_{i_2(k)}(n) \right| \right]$ can be taken, so that there is only one location of the selected strongest path with a corresponding value of n denoted as $n_0(k)$, where $i_1(k), i_2(k)$ represents the indexes of a group of symbols at the same frequency-domain location, and k represent the number of the group; and channel estimation is performed on each group of two symbols at the same frequency-domain location. Taking the LTE as an example, there are two groups of $i_1, i_2$, i.e., $i_1(1) = 1, i_2(1) = 3$ and $i_1(2) = 2, i_2(2) = 4$. The values $h_{i1(k)}(n_0(k))$ and $h_{i2(k)}(n_0(k))$ of the $n_0(k)$-th path in each group are stored.

It is judged whether a preset length of time for which pilot symbols are received expires, and if so, the flow proceeds to the following operations; otherwise, the flow exits for the current sub-frame.

Operation S205: Variations of the delay path of adjacent pilot symbols in respective sub-frames are obtained by calculating time-domain channel variations according to the stored delay path with the highest power for time-domain channel estimation, taking the downlink LTE system as an example, as follows:

Since the frequency-domain locations of the first and third columns of pilot symbols are the same, and the frequency-domain locations of the second and fourth columns of pilot symbols are the same, the first and third columns are grouped together, and the second and fourth columns are grouped together, and the variations of the delay path of the adjacent pilot symbols are calculated.

$(\delta H')^2{}_{(1)}$ and $(\delta H')^2{}_{(2)}$ are calculated in the equations of:

$$\left(\delta H'\right)^2{}_{(1)} = \frac{\left(h_3(n_0(1)) - h_1(n_0(1))\right)^2}{\left|h_3(n_0(1))\right|\left|h_1(n_0(1))\right|}$$

$$\left(\delta H'\right)^2{}_{(2)} = \frac{\left(h_4(n_0(2)) - h_2(n_0(2))\right)^2}{\left|h_4(n_0(2))\right|\left|h_2(n_0(2))\right|}.$$

The respective groups of $(\delta H')^2{}_{(k)}$ of N sub-frames for the statistic operation, calculated in the preset length of time are averaged respectively to get the averages $E[(\delta H')^2{}_{(k)}]$ of the respective groups of variations of the delay path.
In order to make the results more accurate, a smoothing process can be further performed to remove the sub-frames for the statistic operation, with errors above a third threshold and then average the results, particularly as follows: the averages $E'[(\delta H')^2{}_{(k)}]$ of the respective variations in the respective groups of $(\delta H')^2{}_{(k)}]$ are calculated respectively; the squares of the differences $\delta_1, \delta_2, \delta_3 \ldots\ldots \delta_n$ between the respective variations in each group of $(\delta H')^2{}_{(k)}$ and the average $E'[(\delta H')^2{}_{(k)}]$ are calculated; the sub-frames for the statistic operation corresponding to $\delta m(1 \leq m \leq n)$ above the third threshold are removed; and the variations corresponding to the remaining sub-frames in the respective groups of $(\delta H')^2{}_{(k)}$ are averaged again to get the averages $E[((\delta H')^2{}_{(k)}]$ of the variations of the delay path in the respective groups.
Since two columns of pilots at a small spacing are applied at a low speed, so that there is a low difference between their time-domain channel responses, thus resulting in a significant error in measurement. Preferably a threshold is applied to the measurement, and if the value of the measured speed is below a second preset threshold, e.g., 30km/h, then the spacing between each group of pilots for calculation is increased, the statistic operation is performed again, and the measurement result is processed. The following description will be presented taking the LTE downlink system as an example:
In the original algorithm, pilot symbols at the same frequency-domain location are grouped together so that the pilots in the group are spaced by 7 OFDM symbols, and if the measurement result is below the threshold, then a low-speed scenario can be determined, and at this time if pilot symbols spaced by one sub-frame are grouped together, then the pilots in the group are spaced by 14 OFDM symbols, i.e., twice the original spacing, and accordingly the measurement result obtained by referring to a lookup table or the substitution into the equation is also halved.
Alternatively if pilot symbols spaced by one radio frame are grouped together, then the pilots in the group are spaced by 140 OFDM symbols, i.e., 20 times the original spacing, and accordingly the measurement result obtained by referring to a lookup table or the substitution into the equation is also reduced by a factor of 20, i.e., the real speed.
Where the method in which the pilot symbols spaced by one sub-frame shall be supported a configuration in which there are two consecutive downlink sub-frames.
Operation S206: $E[(\delta H')^2{}_{(k)}]$ is revised by the average noise power.
Firstly the noise power values $P_{noise}$ at the receiving end in the N sub-frames for the statistic operation are averaged to get the average noise power $\sigma^2$, and then the average $E[(\delta H')^2{}_{(k)}]$ is revised by the average noise power:

$$\Delta_k = E\left[\left(\delta H'\right)^2{}_{(k)}\right] - \frac{2\sigma^2}{E\left(\left|h_{i_2(k)}(n_0(k))\right|\right) \cdot E\left(\left|h_{i_1(k)}(n_0(k))\right|\right)}.$$

Operation S207: The obtained respective groups of $\Delta_k$ are averaged to get the average variation $E(\Delta_k)$ of the

$$\Delta H = \sqrt{\mathrm{E}\left[\Delta_k\right]}$$

delay path in the preset length of time, the square root of which is .

Operation S208: $\Delta H$ is substituted into the equation of $\hat{v}=F(\Delta H)$ or the " $\Delta H$-V" relationship table is referred to according to $\Delta H$ to thereby estimate the current moving speed of the terminal, and in order to improve the precision, a plurality of tables or equations can be stored corresponding to different delay scenarios, and then correspondingly one of the tables or the equations can be selected for the current delay measurement value.

The relationship between $\Delta H$ and the moving speed v in different channel scenarios can be represented in the form of an equation or a table generated by simulating the statistic averages $\Delta H$ at different moving speed v, at high signal to noise ratios and in different delay scenarios while the terminal is moving at a constant speed, and creating the fitting equation of $\hat{v}=F(\Delta H)$, or the "$\Delta H$-V" relationship table, in the different delay scenarios according to the statistic averages, and storing the equation or the table into the terminal for which the speed needs to be measured. $\Delta H$ can be calculated in the simulation particularly as follows:

A statistic of the channel variations is made to get the square modulus $(\delta H')^2$ of the differences in the time-domain channel estimations between the adjacent pilot symbols, where $(\delta H')^2$ is calculated as in the algorithm to measure the speed; and $(\delta H')^2$ of M radio frames are averaged, and since the simulation is performed in a scenario with a high signal to noise ratio (>30dB), it will not be necessary to revise the result of the average of $(\delta H')^2$ by the noise power, but

$$\Delta H = \sqrt{\mathrm{E}\left[\left(\delta H'\right)^2\right]}$$

instead the square root thereof can be taken directly as , where there is M>>N since higher precision is required for fitting equation or creating table.

With M>>N, the value of M shall be large enough to guarantee higher precision of the created equation or table and consequentially the precision in measurement, where it can be judged whether the value of M is sufficiently large by judging whether the statistic result of $\Delta H$ is stable as M is further increased (the M is typically on the order of a thousand of frames or more in the LTE system); and the value of N is decided by the acceleration available to the UE and the precision required for the measurement. Typically if the acceleration of the UE is high, then the value of N shall be set small (in the LTE system, if the highest acceleration is 2.8 $km/s^2$, then a potentially introduced error in measurement is 10 $km/s^2$ at N of 100) so that a delay of the measurement value relative to the real value and consequentially the resulting largest error in measurement will not be too large. The larger the value of N is, the higher the precision in measurement will be, while the UE is moving at a constant speed.

The operations in the embodiment of the invention can be improved and further described as follows:

(1) The scenario distinguished by the fitting equation of $\hat{v} = F(\Delta H)$ or the "$\Delta H$ - V" relationship table is decided by the type of delay distinguished by the algorithm to measure the delay, and if an algorithm to estimate the largest multi-path delay is unavailable to the receiving end, then the simulation needs to be performed by averaging the statistic results of $\Delta H$ in the respective delay scenarios and further creating a unique fitting equation of $\hat{v} = F(\Delta H)$ or the "$\Delta H$ - V" relationship table common to the respective scenarios.

(2) A smoothing process can be performed on a number of results of testing the speed for higher precision in measurement.

(3) When the base station in the LTE system measures the speed upon uplink data, if pilots of a service channel can not be obtained periodically, then it will be feasible to measure the speed using pilots of a Physical Uplink Control Channel (PUCCH) or a Sounding Reference Symbol (SRS).

In this particular embodiment, since the speed can be measured using the delay path in a simple calculation procedure at a low delay, applicable to scenarios at different delays and different speeds, and the process of testing the speed can be performed before channel estimation is performed on the signal, the result thereof can be applicable directly to the current channel estimation and signal detection processes; and moreover since the result is revised in view of the noise and removing the variations of the delay path with significant mean squared errors, etc., thereby improving the precision in measurement of the speed. The precision of the measurement result can be guaranteed even at a low speed by increasing the spacing between the pilots while performing the calculation.

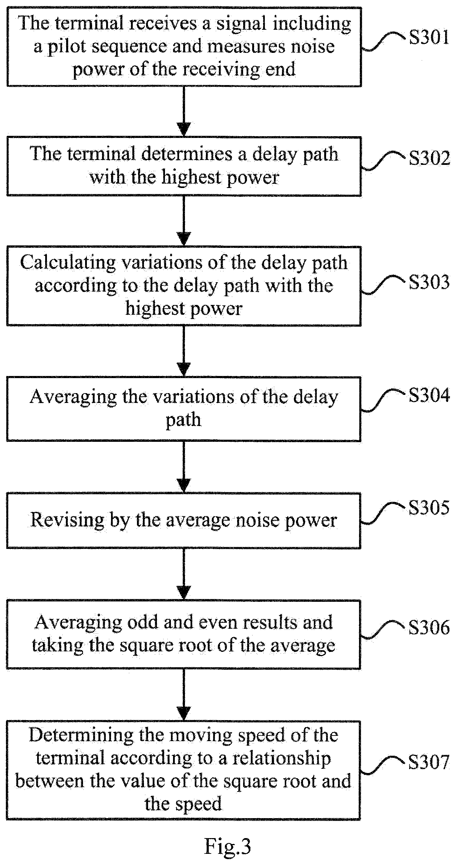

In a second particular embodiment, when the moving speed of a terminal in a China Mobile Multimedia Broadcasting (CMMB) system is measured, referring to Fig.3, the moving speed of the CMMB terminal is measured using a CMMB downlink broadcast signal particularly in the following operations:

Operation S301: The terminal receives a CMMB broadcast signal including a pilot sequence, where pilot symbols of the CMMB signal are consecutive; and

Also the terminal obtains and stores noise power $P_{noise}$ of the receiving end upon reception of the signal.

Operation S302: The terminal derives frequency-domain channel estimation values according to the received pilot symbols and known pilot symbols, derives time-domain channel estimation values $h_i$ according to the frequency-domain channel estimation values, and then selects a delay path with the highest power from $h_i$ and determines the location $n_i$ of the delay path with the highest power for $h_i$, were $n_i$ represents the value of n corresponding to

$$\max_{n=1,\ldots,N_{pilot}} \left| h_i(n) \right|$$

, and $i = 0,1,\ldots\ldots,52$. If the locations of delay paths with the highest power for pilot symbols at the same frequency-domain location are different, then an uniform location of a uniform delay path for use in calculation can be applied under some rule, for example, the location of the delay path with the highest power for the first symbol can be taken as a reference.

Moreover firstly noise reduction can be performed on the received signal in the frequency-domain before this operation to thereby improve the precision of data.

The following operations are performed after a preset length of time for which pilot symbols are received expires:

Operation S303: The pilot symbols of the CMMB signal are consecutive, including odd pilot symbols at the same frequency-domain location and even pilot symbols at the same frequency-domain locations, so channel estimation is performed on every four symbols grouped together, which are denoted as $h_0$, $h_1$, $h_2$ and $h_3$, and results of $(\delta H')^2$ of the odd and even symbols are calculated respectively as variations of the delay path with the highest power in the equations of:

$$\left(\delta H'\right)^2_{even} = \frac{\left(h_0(n_0) - h_2(n_0)\right)^2}{\left| h_0(n_0) \right| \left| h_2(n_0) \right|},$$

and

$$\left(\delta H'\right)^2_{odd} = \frac{\left(h_1(n_1) - h_3(n_1)\right)^2}{\left| h_1(n_1) \right| \left| h_3(n_1) \right|}.$$

Operation S304: $(\delta H')^2$ of the N symbols for the statistic operation are averaged to get $E((\delta H')^2_{even})$ and $E((\delta H')^2_{odd})$.

Operation S305: $(\delta H')^2$ is revised by the average noise power.

Firstly the noise power values $P_{noise}$ of the N symbols for the statistic operation are averaged to get the average noise power $\sigma^2$, and $\Delta_{odd}$ and $\Delta_{even}$ are calculated as follows:

$$\Delta_{even} = \left(\delta H'\right)^2_{even} - \frac{2\sigma^2}{E\left(\left| h_0(n_0) \right|\right) \cdot E\left(\left| h_2(n_0) \right|\right)},$$

and

$$\Delta_{odd} = \left(\delta H'\right)^2_{odd} - \frac{2\sigma^2}{E\left(\left| h_1(n_1) \right|\right) \cdot E\left(\left| h_3(n_1) \right|\right)}.$$

Operation S306: The odd and even results are averaged to get $E[\Delta] = (\Delta_{even} + \Delta_{odd})/2$, the square root of which

$$\Delta H = \sqrt{E\left[\Delta\right]}$$

is .

Operation S307: "$\Delta H$ - V" relationship tables are referred to according to $\Delta H$ to thereby estimate the current moving speed of the terminal.

A signal to noise ratio or channel delay information will not be distinguished in the table, and the number of stored tables can be determined according to the number of levels into which the measured speed is divided, e.g., M levels, where only (M-1) $\Delta H$ - V relationship tables need to be stored.

If the signal to noise ratio is below some threshold, then the lowest measured speed can be determined directly without referring to any relationship table.

N, M, and the levels of the speed can be selected as required for the precision in measurement. For example, N=100 to 200, M=4, and the levels <30, 30 to 60, 60 to 120 and >120 of the speed can be selected.

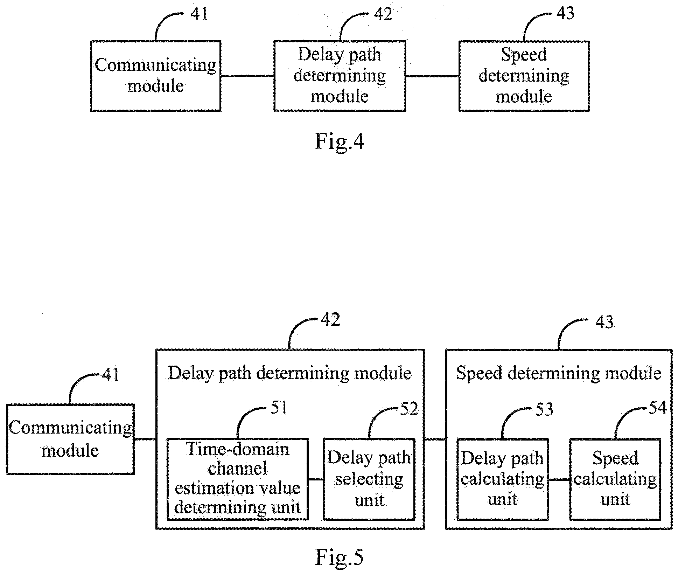

Referring to Fig.4, a device for testing a moving speed of a terminal according to an embodiment of the invention includes:

A communicating module 41 is configured to receive a signal including a pilot sequence transmitted by a transmitting end;

A delay path determining module 42 is configured to determine a time-domain channel estimation value corresponding to each pilot symbol being transmitted, in the pilot sequence according to a known pilot sequence and the signal including the pilot sequence and to select a delay path according to the time-domain channel estimation values; and

A speed determining module 43 is configured to determine the moving speed of the terminal according to the delay path selected in a preset length of time.

Preferably the device further includes a first noise determining module configured to determine noise power when the signal including the pilot sequence is received, and to determine a signal to noise ratio corresponding to the noise power according to the noise power.

The delay path determining module 42 is configured:

To determine the time-domain channel estimation value corresponding to each pilot symbol being transmitted, in the pilot sequence according to the known pilot sequence and the signal including the pilot sequence, and to select the delay path according to the time-domain channel estimation values, when the first noise determining module determines that the signal to noise ratio is above a first preset threshold.

Preferably referring to Fig.5, the delay path determining module 42 includes:

A time-domain channel estimation value determining unit 51 is configured to determine a frequency-domain channel estimation value corresponding to each pilot symbol being transmitted, in the pilot sequence according to the known pilot sequence and the signal including the pilot sequence, and

To determine the time-domain channel estimation value corresponding to the each pilot symbol according to the frequency-domain channel estimation value corresponding to the pilot symbol; and

A delay path selecting unit 52 is configured to select the delay path according to the time-domain channel estimation values. Preferably the delay path selecting unit 52 is configured:

To determine the time-domain channel estimation value corresponding to each pilot symbol being transmitted, in the pilot sequence according to the known pilot sequence and the signal including the pilot sequence, and to select the delay path with the highest power according to the time-domain channel estimation values; and

To determine the location of the selected delay path with the highest power, and if it is determined that locations of delay paths selected for pilot symbols at the same frequency-domain location are different, to select one of the locations of the delay paths and to determine the delay path corresponding to the location as the delay path selected for the pilot symbols at the same frequency-domain location, or to select the location of the delay path maximizing the sum of power of the delay paths corresponding to the pilots at the same frequency-domain location and to determine the delay path corresponding to the location as the delay path selected for the pilot symbols at the same frequency-domain location.

Preferably referring to Fig.5, the speed determining module 43 includes:

A delay path calculating unit 53 is configured to determine an average variation of the delay path selected in the preset length of time according to the delay path in the preset length of time; and

A speed calculating unit 54 is configured to determine the moving speed of the terminal according to the average variation of the delay path.

Preferably the delay path calculating unit 53 is configured:

To group together a plurality of pilot symbols at the same frequency-domain location determined in the preset length of time and to calculate variations of the delay path of the pilot symbols spaced by a preset number of OFDM symbols in the respective groups;

To determine the averages of the variations of the delay path in the respective groups respectively according to the variations of the delay path of the pilot symbols spaced by the preset number of OFDM symbols in the respective groups; and

To determine the average variation of the delay path in the preset length of time according to the averages of the variations of the delay path in the respective groups.

Preferably the speed calculating unit 54 is configured:

To determine the moving speed of the terminal according to the average variation of the delay path, and a pre-stored relationship between the average variation of the delay path and the moving speed of the terminal.

Preferably the delay path calculating unit 53 is further configured:

If the determined moving speed of the terminal is below a second preset threshold, to increase the preset number;

To group together a plurality of pilot symbols at the same frequency-domain location determined in the preset length of time and to calculate variations of the delay path of the pilot symbols spaced by the increased preset number of OFDM symbols in the respective groups;

To determine the averages of the variations of the delay path in the respective groups respectively according to the variations of the delay path of the pilot symbols spaced by the increased preset number of OFDM symbols in the respective groups; and

To determine the average variation of the delay path in the preset length of time according to the averages of the variations of the delay path in the respective groups.

Preferably the device further includes:

A second noise determining module is configured to determine noise power when the signal including the pilot sequence is received, and to determine the average noise power in the preset length of time according to the noise power; and

After the averages of the variations of the delay path in the respective groups is determined respectively according to the variations of the delay path of the pilot symbols spaced by the preset number of OFDM symbols in the respective groups, the delay path calculating unit 53 is further configured:

To revise the averages of the variations of the delay path by the average noise power determined by the second noise determining module.

Preferably the delay path calculating unit 53 configured to determine the averages of the variations of the delay path in the respective groups respectively according to the variations of the delay path of the pilot symbols spaced by the preset number of OFDM symbols in the respective groups is configured:

To calculate the averages of the variations in the respective groups according to the variations of the delay path in the respective groups;

To calculate the squares of the differences between the variations in the respective groups and the averages;

To remove the variations with the squares of the differences above a third preset threshold; and

To determine the averages of the variations of the delay path in the respective groups respectively by averaging the variations of the delay path remaining after the variations with the squares of the variations above the third preset threshold in the respective groups are removed.

In summary, in the embodiments of the invention, the receiving end receives a signal including a pilot sequence transmitted by the transmitting end; the receiving end determines a channel response function corresponding to the signal of each pilot sequence being transmitted, according to a pre-stored pilot sequence and the signal including the pilot sequence and determines a corresponding delay path according to the channel response function; and the receiving end determines the moving speed of the terminal according to the delay path. The embodiments of the invention provide a method and device for testing a moving speed of a terminal so as to measure the moving speed of the terminal according to pilots and noise power so as to improve the precision in measurement.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention.

**Claims**

1. A method for testing a moving speed of a terminal, wherein the method comprises:

   Receiving (S101), by a receiving end, a signal comprising a pilot sequence transmitted by a transmitting end;

   **characterized in that** the method further comprises:

   Determining (S102), by the receiving end, a time-domain channel estimation value corresponding to each pilot symbol being transmitted, in the pilot sequence according to a known pilot sequence and the received signal comprising the pilot sequence, and selecting a delay path according to the time-domain channel estimation values; and
   Determining (S103), by the receiving end, the moving speed of the terminal according to the delay path selected in a preset length of time;
   wherein a number of transmission paths with different delays in transmission over a real space channel are embodied as corresponding power values at different points of time in time-domain channel estimation, wherein a peak point with a power value above a threshold is referred to as the delay path;
   wherein determining, by the receiving end, the time-domain channel estimation value corresponding to each pilot symbol being transmitted, in the pilot sequence according to the known pilot sequence and the signal comprising the pilot sequence and selecting the delay path according to the time-domain channel estimation values comprises:

   determining, by the receiving end, the time-domain channel estimation value corresponding to each pilot symbol being transmitted, in the pilot sequence according to the known pilot sequence and the signal comprising the pilot sequence, and selecting a delay path with a highest power according to the time-domain channel estimation values; and
   determining, by the receiving end, a location of the selected delay path with the highest power, and if the receiving end determines that locations of delay paths selected for pilot symbols at the same frequency-domain location are different, then selecting one of the locations of the delay paths and determining the delay path corresponding to the selected location as the delay path selected for the pilot symbols at the same frequency-domain location, or selecting a location of a delay path maximizing a sum of power of delay paths corresponding to the pilots at the same frequency-domain location and determining the delay path corresponding to the selected location as the delay path selected for the pilot symbols at the same frequency-domain location.

2. The method according to claim 1, wherein determining, by the receiving end, the moving speed of the terminal according to the delay path selected in the preset length of time comprises:

   determining, by the receiving end, an average variation of the delay path selected in the preset length of time according to the delay path in the preset length of time; and
   determining, by the receiving end, the moving speed of the terminal according to the average variation of the delay path.

3. The method according to claim 2, wherein determining, by the receiving end, the average variation of the delay path selected in the preset length of time according to the delay path in the preset length of time comprises:

   grouping together, by the receiving end, a plurality of pilot symbols at the same frequency-domain location determined in the preset length of time and calculating variations of the delay path of pilot symbols spaced by a preset number of Orthogonal Frequency Division Multiplexing, OFDM, symbols in the respective groups;
   determining, by the receiving end, averages of the variations of the delay path in the respective groups respectively according to the variations of the delay path of the pilot symbols spaced by the preset number of OFDM symbols in the respective groups; and
   determining, by the receiving end, the average variation of the delay path in the preset length of time according to the averages of the variations of the delay path in the respective groups.

4. The method according to claim 2, wherein determining, by the receiving end, the moving speed of the terminal according to the average of the variation of the delay path comprises:

   determining, by the receiving end, the moving speed of the terminal according to the average variation of the delay path, and a pre-stored relationship between the average variation of the delay path and the moving speed of the terminal.

5. The method according to claim 3, wherein the method further comprises:

   determining, by the receiving end, noise power when the signal comprising the pilot sequence is received, and determining, by the receiving end, an average noise power in the preset length of time according to the noise power; and
   after the receiving end determines the averages of the variations of the delay path in the respective groups respectively according to the variations of the delay path of the pilot symbols spaced by the preset number of OFDM symbols in the respective groups, the method further comprises:

   revising, by the receiving end, the averages of the variations of the delay path by the average noise power in the preset length of time.

6. The method according to claim 3, wherein the method further comprises:

   increasing, by the receiving end, the preset number if the determined moving speed of the terminal is below a preset threshold;
   grouping together, by the receiving end, a plurality of pilot symbols at the same frequency-domain location determined in the preset length of time and calculating variations of the delay path of the pilot symbols spaced by the increased preset number of OFDM symbols in the respective groups;
   determining, by the receiving end, the averages of the variations of the delay path in the respective groups respectively according to the variations of the delay path of the pilot symbols spaced by the increased preset number of OFDM symbols in the respective groups; and
   determining, by the receiving end, the average variation of the delay path in the preset length of time according to the averages of the variations of the delay path in the respective groups.

7. The method according to claim 3, wherein determining, by the receiving end, the averages of the variations of the delay path in the respective groups respectively according to the variations of the delay path of the pilot symbols spaced by the preset number of OFDM symbols in the respective group comprises:

calculating, by the receiving end, the averages of the variations in the respective groups according to the variations of the delay path in the respective groups;
calculating, by the receiving end, squares of differences between the variations in the respective groups and the averages;
removing, by the receiving end, a variation with a square of difference above a third preset threshold; and determining, by the receiving end, the averages of the variations of the delay path in the respective groups respectively by averaging the variations of the delay path remaining after the variation with the square of difference above the third preset threshold in the respective groups is removed.

8. A device for testing a moving speed of a terminal, wherein the device comprises:

a communicating module (41) configured to receive a signal comprising a pilot sequence transmitted by a transmitting end;

**characterized in that** the device further comprises:

a delay path determining module (42) comprising a time-domain channel estimation value determination unit (51) configured to determine a time-domain channel estimation value corresponding to each pilot symbol being transmitted, in the pilot sequence according to a known pilot sequence and the received signal comprising the pilot sequence, and a delay path selecting unit (52) configured to select a delay path according to the time-domain channel estimation values; and
a speed determining module (43) configured to determine the moving speed of the terminal according to the delay path selected in a preset length of time;
wherein a number of transmission paths with different delays in transmission over a real space channel are embodied as corresponding power values at different points of time in time-domain channel estimation, wherein a peak point with a power value above a threshold is referred to as the delay path; wherein the delay path selecting unit (52) is configured:

to determine the time-domain channel estimation value corresponding to each pilot symbol being transmitted, in the pilot sequence according to the known pilot sequence and the signal comprising the pilot sequence, and to select a delay path with a highest power according to the time-domain channel estimation values; and
to determine a location of the selected delay path with the highest power, and if it is determined that locations of delay paths selected for pilot symbols at the same frequency-domain location are different, to select one of the locations of the delay paths and to determine the delay path corresponding to the selected location as the delay path selected for the pilot symbols at the same frequency-domain location, or
to select a location of a delay path maximizing the sum of power of the delay paths corresponding to the pilots at the same frequency-domain location and to determine the delay path corresponding to the selected location as the delay path selected for the pilot symbols at the same frequency-domain location.

9. The device according to claim 8, wherein the speed determining module (43) comprises:

a delay path calculating unit (53) configured to determine an average variation of the delay path selected in the preset length of time according to the delay path in the preset length of time; and
a speed calculating unit (54) configured to determine the moving speed of the terminal according to the average variation of the delay path.

10. The device according to claim 9, wherein the delay path calculating unit (53) is configured:

to group together a plurality of pilot symbols at the same frequency-domain location determined in the preset length of time and to calculate variations of the delay path of the pilot symbols spaced by a preset number of Orthogonal Frequency Division Multiplexing, OFDM, symbols in the respective groups;
to determine averages of the variations of the delay path in the respective groups respectively according to the variations of the delay path of the pilot symbols spaced by the preset number of OFDM symbols in the respective groups; and

to determine the average variation of the delay path in the preset length of time according to the averages of the variations of the delay path in the respective groups.

11. The device according to claim 9, wherein the speed calculating unit (54) is configured:

to determine the moving speed of the terminal according to the average variation of the delay path, and a pre-stored relationship between the average variation of the delay path and the moving speed of the terminal.

12. The device according to claim 10, wherein the device further comprises:

a second noise determining module configured to determine noise power when the signal comprising the pilot sequence is received, and to determine an average noise power in the preset length of time according to the noise power; and
after the averages of the variations of the delay path in the respective groups is determined respectively according to the variations of the delay path of the pilot symbols spaced by the preset number of OFDM symbols in the respective groups, the delay path calculating unit is further configured:

to revise the averages of the variations of the delay path by the average noise power determined by the second noise determining module.

13. The device according to claim 10, wherein the delay path calculating unit (53) is further configured:

if the determined moving speed of the terminal is below a preset threshold, to increase the preset number;
to group together a plurality of pilot symbols at the same frequency-domain location determined in the preset length of time and to calculate variations of the delay path of the pilot symbols spaced by the increased preset number of OFDM symbols in the respective groups;
to determine the averages of the variations of the delay path in the respective groups respectively according to the variations of the delay path of the pilot symbols spaced by the increased preset number of OFDM symbols in the respective groups; and
to determine the average variation of the delay path in the preset length of time according to the averages of the variations of the delay path in the respective groups.

14. The device according to claim 10, wherein the delay path calculating unit (53) configured to determine the averages of the variations of the delay path in the respective groups respectively according to the variations of the delay path of the pilot symbols spaced by the preset number of OFDM symbols in the respective groups is configured:

to calculate the averages of the variations in the respective groups according to the variations of the delay path in the respective groups;
to calculate squares of differences between the variations in the respective groups and the averages;
to remove a variation with a square of difference above a third preset threshold; and
to determine the averages of the variations of the delay path in the respective groups respectively by averaging the variations of the delay path remaining after the variation with the square of difference above the third preset threshold in the respective groups is removed.

**Patentansprüche**

1. Verfahren zum Testen einer Bewegungsgeschwindigkeit eines Endgeräts, wobei das Verfahren umfasst:

Empfangen (S101), durch ein Empfangsende, eines Signals, das eine Pilotsequenz umfasst, die durch ein Übertragungsende übertragen wird;
**dadurch gekennzeichnet, dass** das Verfahren ferner umfasst:

Bestimmen (S102), durch das Empfangsende, eines Zeitbereich-Kanalschätzwerts, der jedem Pilotsymbol entspricht, das in der Pilotsequenz gemäß einer bekannten Pilotsequenz und dem empfangenen Signal, das die Pilotsequenz umfasst, übertragen wird, und Auswählen eines Verzögerungspfads gemäß den Zeitbereich-Kanalschätzwerten; und
Bestimmen (S103), durch das Empfangsende, der Bewegungsgeschwindigkeit des Endgeräts gemäß dem in einer voreingestellten Zeitdauer ausgewählten Verzögerungspfad;

wobei eine Anzahl von Übertragungswegen mit unterschiedlichen Verzögerungen bei der Übertragung über einen realen Raumkanal als entsprechende Leistungswerte zu unterschiedlichen Zeitpunkten in der Zeitbereich-Kanalschätzung verkörpert sind, wobei ein Scheitelpunkt mit einem Leistungswert oberhalb eines Schwellenwerts als der Verzögerungspfad bezeichnet wird;
wobei das Bestimmen, durch das Empfangsende, des Zeitbereich-Kanalschätzwerts, der jedem Pilotsymbol entspricht, das in der Pilotsequenz gemäß der bekannten Pilotsequenz und dem Signal, das die Pilotsequenz umfasst, übertragen wird, und das Auswählen des Verzögerungspfads gemäß den Zeitbereich-Kanalschätzwerten umfassen:

Bestimmen, durch das Empfangsende, des Zeitbereich-Kanalschätzwerts, der jedem Pilotsymbol entspricht, das in der Pilotsequenz gemäß der bekannten Pilotsequenz und dem Signal, das die Pilotsequenz umfasst, übertragen wird, und Auswählen eines Verzögerungspfads mit einer höchsten Leistung gemäß den Zeitbereich-Kanalschätzwerten; und
Bestimmen, durch das Empfangsende, einer Position des ausgewählten Verzögerungspfads mit der höchsten Leistung, und wenn das Empfangsende bestimmt, dass Positionen von Verzögerungspfaden, die für Pilotsymbole an der gleichen Frequenzbereichsposition ausgewählt werden, unterschiedlich sind, dann Auswählen einer der Positionen der Verzögerungspfade und Bestimmen des Verzögerungspfads, der der ausgewählten Position entspricht, als den für die Pilotsymbole ausgewählten Verzögerungspfad an der gleichen Frequenzbereichsposition, oder Auswählen einer Position eines Verzögerungspfads, der eine Leistungssumme von Verzögerungspfaden maximiert, die den Piloten an der gleichen Frequenzbereichsposition entsprechen, und Bestimmen des Verzögerungspfads, der der ausgewählten Position entspricht, als den für die Pilotsymbole ausgewählten Verzögerungspfad an der gleichen Frequenzbereichsposition.

2.  Verfahren nach Anspruch 1, wobei das Bestimmen, durch das Empfangsende, der Bewegungsgeschwindigkeit des Endgeräts gemäß dem in der voreingestellten Zeitdauer ausgewählten Verzögerungspfad umfasst: Bestimmen, durch das Empfangsende, einer durchschnittlichen Abweichung des in der voreingestellten Zeitdauer ausgewählten Verzögerungspfads gemäß dem Verzögerungspfad in der voreingestellten Zeitdauer; und
Bestimmen, durch das Empfangsende, der Bewegungsgeschwindigkeit des Endgeräts gemäß der durchschnittlichen Abweichung des Verzögerungspfads.

3.  Verfahren nach Anspruch 2, wobei das Bestimmen, durch das Empfangsende, einer durchschnittlichen Abweichung des in der voreingestellten Zeitdauer ausgewählten Verzögerungspfads gemäß dem Verzögerungspfad in der voreingestellten Zeitdauer umfasst:

Zusammengruppieren, durch das Empfangsende, einer Vielzahl von Pilotsymbolen an der gleichen Frequenzbereichsposition, die in der voreingestellten Zeitdauer bestimmt wurde, und Berechnen von Abweichungen des Verzögerungspfads von Pilotsymbolen, die durch eine voreingestellte Anzahl von orthogonalen Frequenzmultiplex(Orthogonal Frequency Division Multiplexing, OFDM)-Symbolen in den jeweiligen Gruppen beabstandet sind;
Bestimmen, durch das Empfangsende, der Durchschnittswerte der Abweichungen der Verzögerungspfade in den jeweiligen Gruppen jeweils gemäß den Abweichungen des Verzögerungspfads der Pilotsymbole, die durch die voreingestellte Anzahl von OFDM-Symbolen in den jeweiligen Gruppen beabstandet sind; und
Bestimmen, durch das Empfangsende, der durchschnittlichen Abweichung des Verzögerungspfads in der voreingestellten Zeitdauer gemäß den Durchschnittswerten der Abweichungen des Verzögerungspfads in den jeweiligen
Gruppen.

4.  Verfahren nach Anspruch 2, wobei das Bestimmen, durch das Empfangsende, der Bewegungsgeschwindigkeit des Endgeräts gemäß der durchschnittlichen Abweichung des Verzögerungspfads umfasst:

Bestimmen, durch das Empfangsende, der Bewegungsgeschwindigkeit des Endgeräts gemäß der durchschnittlichen Abweichung des Verzögerungspfads und einer vorab gespeicherten Beziehung zwischen der durchschnittlichen Abweichung des Verzögerungspfads und der Bewegungsgeschwindigkeit des Endgeräts.

5.  Verfahren nach Anspruch 3, wobei das Verfahren ferner umfasst:

Bestimmen, durch das Empfangsende, der Rauschleistung, wenn das Signal, das die Pilotsequenz umfasst, empfangen wird, und

Bestimmen, durch das Empfangsende, einer durchschnittlichen Rauschleistung in der voreingestellten Zeitdauer gemäß der Rauschleistung; und

nachdem das Empfangsende die Durchschnittswerte der Abweichungen der Verzögerungspfade in den jeweiligen Gruppen jeweils gemäß den Abweichungen des Verzögerungspfads der Pilotsymbole bestimmt, die durch die voreingestellte Anzahl von OFDM-Symbolen in den jeweiligen Gruppen beabstandet sind, das Verfahren ferner umfasst:

    Überprüfen, durch das Empfangsende, der Durchschnittswerte der Abweichungen des Verzögerungspfads mittels der durchschnittlichen Rauschleistung in der voreingestellten Zeitdauer.

6.   Verfahren nach Anspruch 3, wobei das Verfahren ferner umfasst:

    Erhöhen, durch das Empfangsende, der voreingestellten Anzahl, wenn die bestimmte Bewegungsgeschwindigkeit des Endgeräts unterhalb eines voreingestellten Schwellenwerts liegt;

    Zusammengruppieren, durch das Empfangsende, einer Vielzahl von Pilotsymbolen an der gleichen Frequenzbereichsposition, die in der voreingestellten Zeitdauer bestimmt wurden, und Berechnen von Abweichungen des Verzögerungspfads von Pilotsymbolen, die durch die erhöhte voreingestellte Anzahl von OFDM-Symbolen in den jeweiligen Gruppen beabstandet sind;

    Bestimmen, durch das Empfangsende, der Durchschnittswerte der Abweichungen der Verzögerungspfade in den jeweiligen Gruppen jeweils gemäß den Abweichungen des Verzögerungspfads der Pilotsymbole, die durch die erhöhte voreingestellte Anzahl von OFDM-Symbolen in den jeweiligen Gruppen beabstandet sind; und

    Bestimmen, durch das Empfangsende, der durchschnittlichen Abweichung des Verzögerungspfads in der voreingestellten Zeitdauer gemäß den Durchschnittswerten der Abweichungen des Verzögerungspfads in den jeweiligen Gruppen.

7.   Verfahren nach Anspruch 3, wobei das Bestimmen, durch das Empfangsende, der Durchschnittswerte der Abweichungen des Verzögerungspfads in den jeweiligen Gruppen jeweils gemäß den Abweichungen des Verzögerungspfads der Pilotsymbole, die durch die voreingestellte Anzahl von OFDM-Symbolen in der jeweiligen Gruppe beabstandet sind, umfasst:

    Berechnen, durch das Empfangsende, der Durchschnittswerte der Abweichungen in den jeweiligen Gruppen gemäß den Abweichungen des Verzögerungspfads in den jeweiligen Gruppen;

    Berechnen, durch das Empfangsende, der Quadrate von Differenzen zwischen den Abweichungen in den jeweiligen Gruppen und den Durchschnittswerten;

    Entfernen, durch das Empfangsende, einer Abweichung mit einem Quadrat einer Differenz über einem dritten voreingestellten Schwellenwert; und

    Bestimmen, durch das Empfangsende, der Durchschnittswerte der Abweichungen des Verzögerungspfads in den jeweiligen Gruppen jeweils durch Durchschnittsbildung der Abweichungen des Verzögerungspfads, die verbleiben, nachdem die Abweichung mit dem Quadrat einer Differenz über dem dritten voreingestellten Schwellenwert in den jeweiligen Gruppen entfernt wurde.

8.   Vorrichtung zum Testen einer Bewegungsgeschwindigkeit eines Endgeräts, wobei die Vorrichtung umfasst:

    ein Kommunikationsmodul (41), das konfiguriert ist, um ein Signal zu empfangen, das eine Pilotsequenz umfasst, die durch ein Übertragungsende übertragen wird;

    **dadurch gekennzeichnet, dass** die Vorrichtung ferner umfasst:

    ein Verzögerungspfad-Bestimmungsmodul (42), das eine Zeitbereich-Kanalschätzwert-Bestimmungseinheit (51) umfasst, die konfiguriert ist, um einen Zeitbereich-Kanalschätzwert zu bestimmen, der jedem Pilotsymbol entspricht, das in der Pilotsequenz gemäß einer bekannten Pilotsequenz und dem empfangenen Signal, das die Pilotsequenz umfasst, übertragen wird, und eine Verzögerungspfad-Auswahleinheit (52), die konfiguriert ist, um einen Verzögerungspfad gemäß den Zeitbereich-Kanalschätzwerten auszuwählen; und

    ein Geschwindigkeitsbestimmungsmodul (43), das konfiguriert ist, um die Bewegungsgeschwindigkeit des Endgeräts gemäß dem in einer voreingestellten Zeitdauer ausgewählten Verzögerungspfad zu bestimmen;

wobei eine Anzahl von Übertragungswegen mit unterschiedlichen Verzögerungen bei der Übertragung über einen realen Raumkanal als entsprechende Leistungswerte zu unterschiedlichen Zeitpunkten in der Zeitbereich-Kanalschätzung verkörpert sind, wobei ein Scheitelpunkt mit einem Leistungswert oberhalb eines Schwellenwerts als der Verzögerungspfad bezeichnet wird; wobei die Verzögerungspfad-Auswahleinheit (52) konfiguriert ist:

um den Zeitbereich-Kanalschätzwert zu bestimmen, der jedem Pilotsymbol entspricht, das in der Pilotsequenz gemäß der bekannten Pilotsequenz und dem Signal, das die Pilotsequenz umfasst, übertragen wird, und einen Verzögerungspfad mit einer höchsten Leistung gemäß den Zeitbereich-Kanalschätzwerten auszuwählen; und
um eine Position des ausgewählten Verzögerungspfads mit der höchsten Leistung zu bestimmen, und wenn bestimmt wird, dass Positionen von Verzögerungspfaden, die für Pilotsymbole an der gleichen Frequenzbereichsposition ausgewählt wurden, unterschiedlich sind, eine der Positionen der Verzögerungspfade auszuwählen und den Verzögerungspfad, der der ausgewählten Position entspricht, als den für die Pilotsymbole ausgewählten Verzögerungspfad an der gleichen Frequenzbereichsposition zu bestimmen, oder
eine Position eines Verzögerungspfads auszuwählen, der die Leistungssumme der Verzögerungspfade maximiert, die den Piloten an der gleichen Frequenzbereichsposition entsprechen, und den Verzögerungspfad, der der ausgewählten Position entspricht, als den für die Pilotsymbole ausgewählten Verzögerungspfad an der gleichen Frequenzbereichsposition zu bestimmen.

9. Vorrichtung nach Anspruch 8, wobei das Geschwindigkeitsbestimmungsmodul (43) umfasst:

eine Verzögerungspfad-Berechnungseinheit (53), die konfiguriert ist, um eine durchschnittliche Abweichung des in der voreingestellten Zeitdauer ausgewählten Verzögerungspfads gemäß dem Verzögerungspfad in der voreingestellten Zeitdauer zu bestimmen; und
eine Geschwindigkeitsberechnungseinheit (54), die konfiguriert ist, um die Bewegungsgeschwindigkeit des Endgeräts gemäß der durchschnittlichen Abweichung des Verzögerungspfads zu bestimmen.

10. Vorrichtung nach Anspruch 9, wobei die Verzögerungspfad-Berechnungseinheit (53) konfiguriert ist:

um eine Vielzahl von Pilotsymbolen an der gleichen Frequenzbereichsposition, die in der voreingestellten Zeitdauer bestimmt wurden, zusammen zu gruppieren und Abweichungen des Verzögerungspfads der Pilotsymbole zu berechnen, die durch eine voreingestellte Anzahl von orthogonalen Frequenzmultiplex(Orthogonal Frequency Division Multiplexing, OFDM)-Symbolen in den jeweiligen Gruppen beabstandet sind;
um Durchschnittswerte der Abweichungen des Verzögerungspfads in den jeweiligen Gruppen jeweils gemäß den Abweichungen des Verzögerungspfads der Pilotsymbole zu bestimmen, die durch die voreingestellte Anzahl von OFDM-Symbolen in den jeweiligen Gruppen beabstandet sind; und
um die durchschnittliche Abweichung des Verzögerungspfads in der voreingestellten Zeitdauer gemäß den Durchschnittswerten der Abweichungen des Verzögerungspfads in den jeweiligen Gruppen zu bestimmen.

11. Vorrichtung nach Anspruch 9, wobei die Geschwindigkeitsberechnungseinheit (54) konfiguriert ist:

um die Bewegungsgeschwindigkeit des Endgeräts gemäß der durchschnittlichen Abweichung des Verzögerungspfads und einer vorab gespeicherten Beziehung zwischen der durchschnittlichen Abweichung des Verzögerungspfads und der Bewegungsgeschwindigkeit des Endgeräts zu bestimmen.

12. Vorrichtung nach Anspruch 10, wobei die Vorrichtung ferner umfasst:

ein zweites Rauschbestimmungsmodul, das konfiguriert ist, um die Rauschleistung zu bestimmen, wenn das Signal, das die Pilotsequenz umfasst, empfangen wird, und um eine durchschnittliche Rauschleistung in der voreingestellten Zeitdauer gemäß der Rauschleistung zu bestimmen; und
nachdem die Durchschnittswerte der Abweichungen des Verzögerungspfads in den jeweiligen Gruppen jeweils gemäß den Abweichungen des Verzögerungspfads der Pilotsymbole bestimmt sind, die durch die voreingestellte Anzahl von OFDM-Symbolen in den jeweiligen Gruppen beabstandet sind, die Verzögerungspfad-Berechnungseinheit ferner konfiguriert ist:

um die Durchschnittswerte der Abweichungen des Verzögerungspfads mittels der durchschnittlichen Rauschleistung zu überprüfen, die durch das zweite Rauschbestimmungsmodul bestimmt wird.

**13.** Vorrichtung nach Anspruch 10, wobei die Verzögerungspfad-Berechnungseinheit (53) ferner konfiguriert ist:

um, wenn die bestimmte Bewegungsgeschwindigkeit des Endgeräts unter einem voreingestellten Schwellenwert liegt, die voreingestellte Zahl zu erhöhen;
um eine Vielzahl von Pilotsymbolen an der gleichen Frequenzbereichsposition, die in der voreingestellten Zeitdauer bestimmt wurden, zusammen zu gruppieren und Abweichungen des Verzögerungspfads der Pilotsymbole zu berechnen, die durch die erhöhte voreingestellte Anzahl von OFDM-Symbolen in den jeweiligen Gruppen beabstandet sind;
um die Durchschnittswerte der Abweichungen des Verzögerungspfads in den jeweiligen Gruppen jeweils gemäß den Abweichungen des Verzögerungspfads der Pilotsymbole zu bestimmen, die durch die erhöhte voreingestellte Anzahl von OFDM-Symbolen in den jeweiligen Gruppen beabstandet sind; und
um die durchschnittliche Abweichung des Verzögerungspfads in der voreingestellten Zeitdauer gemäß den Durchschnittswerten der Abweichungen des Verzögerungspfads in den jeweiligen Gruppen zu bestimmen.

**14.** Vorrichtung nach Anspruch 10, wobei die Verzögerungspfad-Berechnungseinheit (53), die konfiguriert ist, um die Durchschnittswerte der Abweichungen des Verzögerungspfads in den jeweiligen Gruppen jeweils gemäß den Abweichungen des Verzögerungspfads der Pilotsymbole zu bestimmen, die durch die voreingestellte Anzahl von OFDM-Symbolen in den jeweiligen Gruppen beabstandet sind, konfiguriert ist:

um die Durchschnittswerte der Abweichungen in den jeweiligen Gruppen gemäß den Abweichungen des Verzögerungspfads in den jeweiligen Gruppen zu berechnen;
um Quadrate von Differenzen zwischen den Abweichungen in den jeweiligen Gruppen und den Durchschnittswerten zu berechnen;
um eine Abweichung mit einem Quadrat einer Differenz über einem dritten voreingestellten Schwellenwert zu entfernen; und
um die Durchschnittswerte der Abweichungen des Verzögerungspfads in den jeweiligen Gruppen jeweils durch Durchschnittsbildung der Abweichungen des Verzögerungspfads, die verbleiben, nachdem die Abweichung mit dem Quadrat einer Differenz über dem dritten voreingestellten Schwellenwert in den jeweiligen Gruppen entfernt wurde, zu bestimmen.

**Revendications**

**1.** Procédé de test d'une vitesse de déplacement d'un terminal, le procédé comprenant :

la réception (S101), par une extrémité réceptrice, d'un signal comprenant une séquence pilote transmise par une extrémité émettrice ;
**caractérisé en ce que** le procédé comprend en outre: la détermination (S102), par l'extrémité réceptrice, d'une valeur d'estimation de canal du domaine temps correspondant à chaque symbole pilote émis, dans la séquence pilote conformément à une séquence pilote connue et au signal comprenant la séquence pilote et la sélection d'un chemin de retard conformément aux valeurs d'estimation de canal du domaine temps ; et
la détermination (S103), par l'extrémité réceptrice, de la vitesse de déplacement du terminal conformément au chemin de retard sélectionné dans une longueur de temps prédéfinie ;
dans lequel un certain nombre de chemins de transmission aux retards de transmission différents sur un canal dans l'espace réel sont mis en oeuvre en tant que valeurs de puissance correspondantes à différents instants de temps dans l'estimation de canal de domaine temporel, dans lequel un point de crête ayant une valeur de puissance supérieure à une limite est appelé chemin de retard ;
dans lequel la détermination, par l'extrémité réceptrice, de la valeur d'estimation de canal du domaine temps correspondant à chaque symbole pilote émis, dans la séquence pilote conformément à la séquence pilote connue et au signal comprenant la séquence pilote et la sélection du chemin de retard conformément aux valeurs d'estimation de canal du domaine temps comprend :

la détermination, par l'extrémité réceptrice, de la valeur d'estimation de canal du domaine temps correspondant à chaque symbole pilote émis, dans la séquence pilote conformément à la séquence pilote connue et au signal comprenant la séquence pilote, et la sélection d'un chemin de retard de la plus haute puissance conformément aux valeurs d'estimation de canal du domaine temps ; et

la détermination, par l'extrémité réceptrice, d'un emplacement du chemin de retard de la plus haute puissance sélectionné, et si l'extrémité réceptrice détermine que les emplacements des chemins de retard sélectionnés pour les symboles pilotes au même emplacement du domaine fréquence sont différents, la sélection alors de l'un des emplacements des chemins de retard et la détermination du chemin de retard correspondant à l'emplacement comme chemin de retard sélectionné pour les symboles pilotes au même emplacement du domaine fréquence, ou la sélection d'un emplacement d'un chemin de retard qui maximise une somme de puissance des chemins de retard correspondant aux pilotes au même emplacement du domaine fréquence et la détermination du chemin de retard correspondant à l'emplacement comme le chemin de retard sélectionné pour les symboles pilotes au même emplacement du domaine fréquence.

2. Procédé selon la revendication 1, dans lequel la détermination, par l'extrémité réceptrice, de la vitesse de déplacement du terminal conformément au chemin de retard sélectionné dans la longueur de temps prédéfinie comprend :

la détermination, par l'extrémité réceptrice, d'une variation moyenne du chemin de retard sélectionné dans la longueur de temps prédéfinie conformément au chemin de retard dans la longueur de temps prédéfinie ; et
la détermination, par l'extrémité réceptrice, de la vitesse de déplacement du terminal conformément à la variation moyenne du chemin de retard.

3. Procédé selon la revendication 2, dans lequel la détermination, par l'extrémité réceptrice, de la variation moyenne du chemin de retard sélectionné dans la longueur de temps prédéfinie conformément au chemin de retard dans la longueur de temps prédéfinie comprend :

le regroupement, par l'extrémité réceptrice, d'une pluralité de symboles pilotes au même emplacement du domaine fréquence déterminé dans la longueur de temps prédéfinie et le calcul de variations du chemin de retard de symboles pilotes espacés par un nombre prédéfini de symboles de multiplexage par répartition orthogonale de la fréquence, OFDM, dans les groupes respectifs ;
la détermination, par l'extrémité réceptrice, de moyennes des variations du chemin de retard dans les groupes respectifs respectivement conformément aux variations du chemin de retard des symboles pilotes espacés par le nombre prédéfini de symboles OFDM dans les groupes respectifs ; et
la détermination, par l'extrémité réceptrice, de la variation moyenne du chemin de retard dans la longueur de temps prédéfinie conformément aux moyennes des variations du chemin de retard dans les groupes respectifs.

4. Procédé selon la revendication 2, dans lequel la détermination, par l'extrémité réceptrice, de la vitesse de déplacement du terminal conformément à la moyenne de la variation du chemin de retard comprend

la détermination, par l'extrémité réceptrice, de la vitesse de déplacement du terminal conformément à la variation moyenne du chemin de retard, et d'une relation prémémorisée entre la variation moyenne du chemin de retard et la vitesse de déplacement du terminal.

5. Procédé selon la revendication 3, le procédé comprenant en outre :

la détermination, par l'extrémité réceptrice, d'une puissance de bruit quand le signal comprenant la séquence pilote est reçu, et
la détermination, par l'extrémité réceptrice, d'une puissance de bruit moyenne dans la longueur de temps prédéfinie conformément à la puissance de bruit ; et
le procédé comprenant en outre, après que l'extrémité réceptrice détermine les moyennes des variations du chemin de retard dans les groupes respectifs respectivement conformément aux variations du chemin de retard des symboles pilotes espacés par le nombre prédéfini de symboles OFDM dans les groupes respectifs :

la révision, par l'extrémité réceptrice, des moyennes des variations du chemin de retard par la puissance de bruit moyenne dans la longueur de temps prédéfinie.

6. Procédé selon la revendication 3, le procédé comprenant en outre :

l'augmentation, par l'extrémité réceptrice, du nombre prédéfini si la vitesse de déplacement déterminée du terminal est inférieure à une seconde limite prédéfinie ;
le regroupement, par l'extrémité réceptrice, d'une pluralité de symboles pilotes au même emplacement du domaine fréquence déterminé dans la longueur de temps prédéfinie et le calcul de variations du chemin de retard des symboles pilotes espacés par le nombre prédéfini augmenté de symboles OFDM dans les groupes respectifs ;

la détermination, par l'extrémité réceptrice, des moyennes des variations du chemin de retard dans les groupes respectifs respectivement conformément aux variations du chemin de retard des symboles pilotes espacés par le nombre prédéfini augmenté de symboles OFDM dans les groupes respectifs ; et

la détermination, par l'extrémité réceptrice, de la variation moyenne du chemin de retard dans la longueur de temps prédéfinie conformément aux moyennes des variations du chemin de retard dans les groupes respectifs.

7. Procédé selon la revendication 3, dans lequel la détermination, par l'extrémité réceptrice, des moyennes des variations du chemin de retard dans les groupes respectifs respectivement conformément aux variations du chemin de retard des symboles pilotes espacés par le nombre prédéfini de symboles OFDM dans le groupe respectif comprend :

le calcul, par l'extrémité réceptrice, des moyennes des variations dans les groupes respectifs conformément aux variations du chemin de retard dans les groupes respectifs ;

le calcul, par l'extrémité réceptrice, de carrés de différences entre les variations dans les groupes respectifs et les moyennes ;

la suppression, par l'extrémité réceptrice, d'une variation ayant un carré de différence supérieur à une troisième limite prédéfinie ; et

la détermination, par l'extrémité réceptrice, des moyennes des variations du chemin de retard dans les groupes respectifs respectivement en moyennant les variations du chemin de retard après la suppression de la variation au carré de différence supérieur à la troisième limite prédéfinie dans les groupes respectifs.

8. Dispositif de test d'une vitesse de déplacement d'un terminal, le dispositif comprenant :

un module de communication (41) configuré pour recevoir un signal comprenant une séquence pilote transmise par une extrémité émettrice ;

**caractérisé en ce que** le dispositif comprend en outre un module de détermination de chemin de retard (42) comprenant une unité de détermination de valeur d'estimation de canal du domaine temps (51) configurée pour déterminer une valeur d'estimation de canal du domaine temps correspondant à chaque symbole pilote émis, dans la séquence pilote conformément à une séquence pilote connue et au signal reçu comprenant la séquence pilote et une unité de sélection de chemin de retard (52) configurée pour sélectionner un chemin de retard conformément aux valeurs d'estimation de canal du domaine temps ; et

un module de détermination de vitesse (43) configuré pour déterminer la vitesse de déplacement du terminal conformément au chemin de retard sélectionné dans une longueur de temps prédéfinie ;

dans lequel un certain nombre de chemins de transmission aux retards de transmission différents sur un canal dans l'espace réel sont mis en oeuvre en tant que valeurs de puissance correspondantes à différents instants de temps dans l'estimation de canal de domaine temporel, dans lequel un point de crête ayant une valeur de puissance supérieure à une limite est appelé chemin de retard ; dans lequel l'unité de sélection de chemin de retard (52) est configurée pour :

déterminer la valeur d'estimation de canal du domaine temps correspondant à chaque symbole pilote émis, dans la séquence pilote conformément à la séquence pilote connue et au signal comprenant la séquence pilote, et sélectionner un chemin de retard conformément aux valeurs d'estimation de canal du domaine temps ; et

déterminer un emplacement du chemin de retard de la plus haute puissance sélectionné, et s'il est déterminé que les emplacements des chemins de retard sélectionnes pour les symboles pilotes au même emplacement du domaine fréquence sont différents, sélectionner l'un des emplacements des chemins de retard et déterminer le chemin de retard correspondant à l'emplacement comme chemin de retard sélectionné pour les symboles pilotes au même emplacement du domaine fréquence, ou

sélectionner un emplacement d'un chemin de retard qui maximise une somme de puissance des chemins de retard correspondant aux pilotes au même emplacement du domaine fréquence et déterminer le chemin de retard correspondant à l'emplacement comme le chemin de retard sélectionné pour les symboles pilotes au même emplacement du domaine fréquence.

9. Dispositif selon la revendication 8, dans lequel le module de détermination de vitesse (43) comprend :

une unité de calcul de chemin de retard (53) configurée pour déterminer une variation moyenne du chemin de retard sélectionné dans la longueur de temps prédéfinie conformément au chemin de retard dans la longueur de temps prédéfinie ; et

une unité de calcul de vitesse (54) configurée pour déterminer la vitesse de déplacement du terminal conformément à la variation moyenne du chemin de retard.

**10.** Dispositif selon la revendication 9, dans lequel l'unité de calcul de chemin de retard (53) est configurée pour :

regrouper une pluralité de symboles pilotes au même emplacement du domaine fréquence déterminé dans la longueur de temps prédéfinie et calculer des variations du chemin de retard des symboles pilotes espacés par un nombre prédéfini de symboles de multiplexage par répartition orthogonale de la fréquence, OFDM, dans les groupes respectifs ;

déterminer des moyennes des variations du chemin de retard dans les groupes respectifs respectivement conformément aux variations du chemin de retard des symboles pilotes espacés par le nombre prédéfini de symboles OFDM dans les groupes respectifs ; et

déterminer la variation moyenne du chemin de retard dans la longueur de temps prédéfinie conformément aux moyennes des variations du chemin de retard dans les groupes respectifs.

**11.** Dispositif selon la revendication 9, dans lequel l'unité de calcul de vitesse (54) est configurée pour

déterminer la vitesse de déplacement du terminal conformément à la variation moyenne du chemin de retard, et une relation prémémorisée entre la variation moyenne du chemin de retard et de la vitesse de déplacement du terminal.

**12.** Dispositif selon la revendication 10, le dispositif comprenant en outre :

un second module de détermination de bruit configuré pour déterminer une puissance de bruit quand le signal comprenant la séquence pilote est reçu, et déterminer une puissance de bruit moyenne dans la longueur de temps prédéfinie conformément à la puissance de bruit ; et

l'unité de calcul de chemin de retard est configurée en outre pour, après la détermination des moyennes des variations du chemin de retard dans les groupes respectifs respectivement conformément aux variations du chemin de retard des symboles pilotes espacés par le nombre prédéfini de symboles OFDM dans les groupes respectifs :

réviser les moyennes des variations du chemin de retard par la puissance de bruit moyenne déterminée par le second module de détermination de bruit.

**13.** Dispositif selon la revendication 10, dans lequel l'unité de calcul de chemin de retard (53) est configurée en outre pour :

si la vitesse de déplacement déterminée du terminal est inférieure à une seconde limite prédéfinie, augmenter le nombre prédéfini ;

regrouper une pluralité de symboles pilotes au même emplacement du domaine fréquence déterminé dans la longueur de temps prédéfinie et calculer des variations du chemin de retard des symboles pilotes espacés par le nombre prédéfini augmenté de symboles OFDM dans les groupes respectifs ;

déterminer les moyennes des variations du chemin de retard dans les groupes respectifs respectivement conformément aux variations du chemin de retard des symboles pilotes espacés par le nombre prédéfini augmenté de symboles OFDM dans les groupes respectifs ; et

déterminer la variation moyenne du chemin de retard dans la longueur de temps prédéfinie conformément aux moyennes des variations du chemin de retard dans les groupes respectifs.

**14.** Dispositif selon la revendication 10, dans lequel l'unité de calcul de chemin de retard (53) configurée pour déterminer les moyennes des variations du chemin de retard dans les groupes respectifs respectivement conformément aux variations du chemin de retard des symboles pilotes espacés par le nombre prédéfini de symboles OFDM dans les groupes respectifs est configurée pour :

calculer les moyennes des variations dans les groupes respectifs conformément aux variations du chemin de retard dans les groupes respectifs ;

calculer des carrés de différences entre les variations dans les groupes respectifs et les moyennes ;

supprimer une variation ayant un carré de différence supérieur à une troisième limite prédéfinie ; et déterminer les moyennes des variations du chemin de retard dans les groupes respectifs respectivement en moyennant les variations du chemin de retard après la suppression de la variation au carré de différence supérieur à la troisième limite prédéfinie dans les groupes respectifs.

```
┌──────────────────────────────────┐
│   A receiving end receives a signal   │ ╭─S101
│  including a pilot sequence transmitted │
│        by a transmitting end         │
└──────────────────────────────────┘
                 │
                 ▼
┌──────────────────────────────────┐
│  The receiving end determines time-  │ ╭─S102
│   domain channel estimation values   │
│       and selects a delay path       │
└──────────────────────────────────┘
                 │
                 ▼
┌──────────────────────────────────┐
│    The receiving end determines the    │ ╭─S103
│ moving speed of the terminal according │
│      to the selected delay path       │
└──────────────────────────────────┘
```

Fig.1

```
┌─────────────────────────────────┐
│  The receiving end receives a signal  │
│  including a pilot sequence and measures │ ⟩ S201
│  noise power of the receiving end  │
└─────────────────────────────────┘
                 │
                 ▼
┌─────────────────────────────────┐
│  The receiving end calculates frequency- │ ⟩ S202
│  domain channel estimation values  │
└─────────────────────────────────┘
                 │
                 ▼
┌─────────────────────────────────┐
│  The receiving end performs IFFT  │
│  transformation on the frequency-domain │ ⟩ S203
│  channel estimation values  │
└─────────────────────────────────┘
                 │
                 ▼
┌─────────────────────────────────┐
│  The receiving end determines a delay  │
│  path with the highest power according to │ ⟩ S204
│  a time-domain channel function derived │
│  as a result of the transformation  │
└─────────────────────────────────┘
                 │
                 ▼
┌─────────────────────────────────┐
│  Calculating variations of the delay path │
│  according to the delay path with the  │ ⟩ S205
│  highest power and averaging calculated │
│  respective groups of data  │
└─────────────────────────────────┘
                 │
                 ▼
┌─────────────────────────────────┐
│  Revising by the average noise power  │ ⟩ S206
└─────────────────────────────────┘
                 │
                 ▼
┌─────────────────────────────────┐
│  Taking the square root of the result of │ ⟩ S207
│  averaging the respective groups of data │
└─────────────────────────────────┘
                 │
                 ▼
┌─────────────────────────────────┐
│  Determining the moving speed of the  │
│  terminal according to a relationship  │ ⟩ S208
│  determined as a result of simulation  │
└─────────────────────────────────┘
```

Fig.2

The terminal receives a signal including a pilot sequence and measures noise power of the receiving end — S301

The terminal determines a delay path with the highest power — S302

Calculating variations of the delay path according to the delay path with the highest power — S303

Averaging the variations of the delay path — S304

Revising by the average noise power — S305

Averaging odd and even results and taking the square root of the average — S306

Determining the moving speed of the terminal according to a relationship between the value of the square root and the speed — S307

Fig.3

41

Communicating module — 41 | Delay path determining module — 42 | Speed determining module — 43

Fig.4

Delay path determining module — 42

Speed determining module — 43

Communicating module — 41

Time-domain channel estimation value determining unit — 51

Delay path selecting unit — 52

Delay path calculating unit — 53

Speed calculating unit — 54

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1507292 A